Europäisches Patentamt

European Patent Office

Office européen des brevets

(11) Publication number: **0 334 614**
**A2**

## (12) EUROPEAN PATENT APPLICATION

(21) Application number: **89302810.0**

(22) Date of filing: **21.03.89**

(51) Int. Cl.⁴: **G 01 N 27/16**

(30) Priority: **21.03.88 GB 8806695**

(43) Date of publication of application:
**27.09.89 Bulletin 89/39**

(84) Designated Contracting States: **CH DE FR GB LI**

(71) Applicant: **Sieger Limited**
**31 Nuffield Estate**
**Poole Dorset BH17 7RZ (GB)**

(72) Inventor: **Balfour, David**
**3, Canford Cliffs Avenue Poole**
**Dorset BH14 9QN (GB)**

**Willatt, Bruce Michael Turnstones**
**Lower Blandford St. Mary Blandford**
**Dorset DT11 9ND (GB)**

(74) Representative: **Brereton, Paul Arthur et al**
**REDDIE & GROSE 16 Theobalds Road**
**London WC1X 8PL (GB)**

(54) **Catalytic gas detector.**

(57) A catalytic gas detector for detecting flammable gases comprises a Wheatstone bridge circuit formed on a silicon substrate 10. The silicon substrate is coated with an insulating layer 12 of silicon nitride.

The Wheatstone bridge is formed as an electrically conductive track deposited on the layer of silicon nitride. It consists of resistive heating sensing element 24 and compensating element 26 and resistors 34 and 36 connected together by leads 28.

The sensing element 24 is formed as a meanandering track of platinum coated with a ceramic substrate 30 bearing catalyst material. The compensating element 26 is similar to the sensing element 24 except that the substrate 32 is inert.

An electric current is passed through the bridge circuit to cause the resistive heating elements 24 and 26 to be heated to the operating temperature.

When a flammable gas is present, it oxidises exothermically on the catalyst bearing substrate 30 causing the temperature of the sensing element 24 to rise compared with the termperature of the compensating element 26. The temperature difference gives rise to a difference in electrical resistance of the elements 24 and 26 which is detected by the Wheatstone bridge to indicate the presence of the flammable gas.

The sensing element 24 and the compensating element 26 are formed on bridge portions 20 and 22 of the nitride layer 12 where some or all of the underlying silicon 10 has been removed. A slot 18 is formed between the bridge portion 20 and 22 to reduce heat loss from the sensing element 24.

FIG 3

## Description

## CATALYTIC GAS DETECTOR

The present invention relates to catalytic flammable gas detectors and to methods of making such detectors.

Gas detectors which operate by catalytic oxidation of combustible gases on a catalyzing surface of a sensing element are well known. The sensing element usually comprises a coil of fine oxidation-resistant wire embedded in a ceramic bead, the constituents of which are thermally stable even when the bead is heated to temperatures as high as 750°C for long periods. A catalyst is distributed in the surface layer of the bead or throughout the bead. Such sensing elements are described in patent specifications GB 973 250 and GB 2 125 554.

Typically the coil is of platinum or platinum alloy wire 10 to 100 microns in diameter. The catalyst which is normally a precious metal such as platinum or palladium activates oxidation of flammable gases. The ceramic bead may be formed as an aggregate of fine particles, preferably of less than 100nm mean diameter, such as alumina to which some thorium nitrate has been added as a binding agent.

Where the catalyst is dispersed in the surface layer of the bead, the bead may be formed by first fusing the alumina to form a bead around the wire coil, then dipping the bead thus formed in a solution of a platinum salt, and then heating the bead electrically to decompose the salt and form the dispersed platinum catalyst.

Where the catalyst is dispersed throughout the bead. the catalyst is first dispersed over the alumina material by evaporating a slurry of finally divided aluminium oxide in a solution of precious metal salt, grinding the resultant powder and heating to decompose it so that the precious metal is finally dispersed over the powder. A slurry is then prepared by mixing this powder with aluminium nitrate. The platinum coil is prepared by dipping it in a solution of aluminium nitrate and heating it electrically to decompose the aluminium nitrate to aluminium oxide so as to set the coil rigidly in position. The coil is then dipped in the slurry of catalyst powder with aluminium nitrate and heated electrically to dry the slurry. After several coats have been applied to make up a bead of sufficient size, the coil is then heated electrically to a sufficient temperature to decompose the aluminium nitrate into alumina so that it acts as a binder holding the platinum catalyst on the alumina powder support together as an aggregate.

An electric current is passed through the coil to heat the bead to a temperature that is sufficient for total oxidation of the flammable gas reaching the surface of the bead. The current passed through the coil should be high enough to ensure that the output obtained from the bead is reasonably independent of small changes in temperature. The oxidation of the flammable gas is exothermic and therefore causes a rise in temperature on the surface of the catalyst which is transmitted through the support to the coil by conduction. A change in the electrical resistance of the coil results. This change in resistance is measured on a Wheatstone bridge, the bead being inserted into one arm of the bridge and the bridge being balanced when no flammable gases are present. The voltage developed across the bridge when a flammable gas is present is a measure of the concentration of the flammable gas.

A second bead is placed in another arm of the Wheatstone bridge to provide compensation for any changes in the voltage across the sensing bead caused by variation in ambient temperature, pressure or humidity. This second bead is normally called a non-sensitive or compensator bead and in previous gas detectors it has been constructed using a platinum wire coil coated with either a glass or an alumina bead. In the latter case, the surface is rendered inactive towards the flammable gas by treatment with potassium hydroxide.

Such catalytic detectors are mounted in sensor housings and incorporated into instruments. In some cases the instruments need to be portable and carry their own power supply.

In practice the catalytic element is powered to provide a surface temperature of 350°C to 550°C. Typically this requires dissipation of electrical power of 300 to 700mW. The level of power consumption limits the operating duty of a portable instrument before the batteries need changing or recharging. In some situations a reasonable interval between battery changes or recharging can only be achieved by large batteries which add to the weight and size of the instrument making it less convenient to use.

There is thus a need for a catalytic gas detector to be constructed with a lower power consumption.

Attempts have been made to reduce the power consumption by increasing the resistance of the platinum coil. There are however practical limits in making coils of high resistance. If the length of wire is increased the number of turns that have to be accommodated in the bead is increased and there is a risk that adjacent coils may touch causing a short circuit. If the diameter of the wire is decreased to increase the resistance the wire will eventually become so thin it lacks sufficient strength to be handled easily in the manufacturing process.

The aim of the present invention, at least in its preferred form, is to provide an alternative form of catalytic gas detector which is capable of being manufactured inexpensively and which has a lower power consumption than the typical known catalytic gas detector.

According to the present invention, a catalytic gas detector comprises a substrate, an electrical resistive heat sensing element formed on the substrate as a track of electrically conductive material, and a coating of catalytic material on the electrical resistive heating sensing element.

Preferably the substrate comprises a wafer of silicon coated with a layer of electrically insulating material on which the track is deposited. A preferred material for the layer is silicon nitride which has good thermal insulating properties enabling the heating element to maintain the catalytic material at the desired operating temperature with a small consumption of electrical power.

In the preferred arrangement the heating element is formed on a bridge portion of the substrate in which the thickness of the substrate is less than that of the remainder of the substrate. The bridge portion may be formed by removing part of the substrate on the opposite side of the substrate to the heating sensing element. The removal may be effected by etching techniques. Where the substrate is a silicon substrate with a silicon nitride layer it is preferred to remove all the silicon in the region of the bridge so that the bridge is formed wholly of the silicon nitride layer. In such circumstances however the silicon nitride layer must be sufficiently thick to provide adequate strength. With this arrangement, heat loss is minimised because the thermal conductivity of silicon nitride is significantly lower than the thermal conductivity of silicon and there is no silicon in the region of the bridge to conduct heat passing through the silicon nitride layer sideways into the thicker portions of silicon.

Preferably two heating elements are formed on the substrate, one being coating with the catalytic material to form the sensing element and the other having no catalytic material and forming a compensating element. The two elements may be connected together in a Wheatstone Bridge circuit. The resistors which form the third and fourth arms of the Wheatstone Bridge may also be formed as a resistive track on the substrate.

Where two heating elements are formed on the substrate, they should preferably both be formed on bridge portions of similar dimensions in order that they should exhibit similar characteristics. A slot may be formed in the substrate between the bridge portions to reduce heat transfer between the two heating elements. The heating elements may be covered with a protective insulating layer of for example silicon nitride or silicon dioxide. The compensating heating element may have a coating of inert material to match its thermal characterised, such as thermal capacity and emissivity, to that of the sensing element.

The electrically conductive tracks which form the heating elements should be of a material which will not oxidise at the operating temperature. Platinum is the preferred material although other suitable precious metals or alloys of precious metals may be used.

The catalytic material may comprise platinum dispersed over a ceramic support. The ceramic material may comprise alumina to which a little thorium nitrate may have been added as a binding agent. The platinum may be dispersed in the surface layer or throughout the coating using the techniques described above and the techniques described in our patent specification GB-A-2 125 554.

The present invention also relates to a method of manufacturing a catalytic gas detector as described above. In the method, an electrically-resistive heating sensing element is formed by depositing a track of electrically-conducting material on a substrate, and coating the sensing element with a catalytic material.

Preferably the substrate is coated with an electrically and thermally insulating layer prior to deposition of the sensing element. In the case of a silicon substrate, the layer may be formed by vapour deposition for example by reacting NH2 and SiH2Cl2 above the heated substrate to produce a deposited film of Si3N4.

The track is preferably deposited by masking the substrate and coating the substrate with the electrically conductive material, for example by sputter or vapour deposition techniques.

The coating of the catalytic material may be applied by vapour deposition sputtering or applying a solution or suspension of a precursor of the material by painting, printing, liquid dropping or masking techniques, and decomposing the precursor to form the catalytic material by heating the electrically resistive heating sensing element, for example by baking or by passing current through the element.

Many such catalytic detectors may be formed simultaneously on a single wafer of silicon using these techniques. The wafer may then be divided up to form individual detectors.

Using the techniques described above catalytic detectors may be made in large numbers at low unit cost. By suitable choice of the dimensions of the track to produce a high resistance and suitable dimensions and materials for the substrate to produce low heat loss, a catalytic detector of low power consumption can be constructed which can therefore operate from a battery power supply without requiring the batteries to be changed frequently.

An embodiment of the invention will now be described, by way of example, with reference to the accompanying drawings, of which:

Fig. 1 shows a perspective view of a catalytic gas detector in accordance with the invention at an intermediate stage during its manufacture;

Fig. 2 shows a plan view of the detector of Fig. 1;

Fig. 3 shows a perspective view of the catalytic detector of Fig. 1 in its finished state;

Fig. 4 shows a section on the line 4-4 of Fig. 3; and

Fig. 5 shows a perspective view similar to Fig. 1 of a modified form of catalytic gas detector at an intermediate stage during manufacture.

The catalytic detector shown in the drawings is manufactured from a silicon wafer using standard photolithography and etching techniques. Using these techniques several virtually identical detectors can be manufactured from a single wafer simultaneously.

A single crystal silicon wafer 10 approximately 100 microns or more thick is notionally divided into squares, each having sides of less than 4mm long. Each square will form a single catalytic gas detector. A single square of the silicon wafer is shown in the drawings.

Each square is coated with a layer 12 of silicon nitride by low pressure chemical vapour deposition to a thickness of between 0.5 and 10 microns (typically 2 microns), apart from a rectangular portion of approximately 200 microns by 500 microns which has been previously marked to prevent the coating being applied in this area.

A hole 14, approximately 500 microns by 500 microns, is etched anisotropically in the silicon chip 10 from the underside 16 to leave a diaphragm consisting only of silicon nitride or of silicon nitride on a remaining thickness of silicon up to 10 microns thick. The particular form of diaphragm used will depend on the thickness of the silicon nitride layer and should be such that it has an acceptable mechanical strength. The area that is not coated with silicon nitride is etched away to form a slot 18 200 microns by 500 microns passing through the chip to the hole 14. Thus, two bridging portions 20 and 22 are formed 500 microns long and 150 microns wide and separated from one another by a thermally insulating air gap formed by the slot 18.

The upper surface of the chip is then masked to define the intricate pattern of resistive heating elements. An electrically conductive track is laid down on the unmarked area of the silicon nitride layer by sputtering or evaporating platinum (or other precious metal or mixtures thereof) on the silicon nitride surface to a depth of .05 to 1 microns.

The two resistive heating elements 24 and 26 are formed by the tracks on the bridging portions 20 and 22 respectively. Each heating element consists of a meandering track approximately 5 microns wide and having several closely spaced straight parallel sections joined together at alternate ends.

Electrical leads 28 to the two resistive heating elements are formed at the same time as the heating elements by tracks of wider and thicker sections.

A protective coating of, for example, silicon nitride may then be deposited on top of the resistive heating elements to provide additional protection against oxidation at the operating temperatures (typically 350 to 500° C) of the detector. Typically, the silicon nitride layer over the heating elements may be one micron thick.

A ceramic substrate embodying the catalyst is now applied over the resistive heating element 24 that is to form the sensing element. A comparable but inactive substrate is applied over the resistive heating element 26 that is to form the compensating element. The constitution and method of formation of the substrates for the sensing and compensating elements may be the same as for conventional detecting and compensating elements. In particular, the sensing element may be formed by the method described in our patent specification GB-A-2 125 554. For the sensing element, ceramic material mixed with a catalyst is applied in the form of a slurry of alumina in a solution of a platinum salt over the area of the heating element 24. The ceramic material may be applied by a brush, by dropper by printing or through a mask. If it is desired to build up a thickness greater than can be formed in a single application, the slurry may be dried by external heating or by passing a small current through the heating element before applying further coats. Once a sufficient thickness has been built up on the heating element the ceramic material is sintered and stabilised by heating the ceramic substrate material normally in the presence of a flammable gas to greater than 700° C. A layer 30 of catalytic material of between 100 and 1,000 microns thick is thus formed over the sensing element 24.

The compensating element is formed in a similar way using material without catalyst to form a layer of inert substrate material 32 over the compensating element 26. The dimensions and constitution of the layer of the compensating substrate should be chosen so as to match as closely as possible the thermal characteristics of the sensing element.

To complete the Wheatstone bridge circuit two resistive elements 34 and 36 are formed on the silicon chip by masking and depositing a resistive track between sections of the leads 28. The material used for the resistors 34 and 36 must have a low temperature coefficient of resistance. Iron/nickel alloy may be used. The resistors may be trimmed by laser removal of material so that they are accurately matched in value.

The four arms of the Wheatstone bridge are formed by the sensing element 24 the compensating element 26 and the resistors 34 and 36 respectively. Terminals 38 and 40 formed on the leads 28 are connected to a power supply and terminals 42 and 44 are connected to a current measuring instrument.

Once the catalytic detectors have been formed on the silicon wafer the wafer is cut up into pieces, each piece having one detector on it. The detector may be mounted in a proprietory TO5 can.

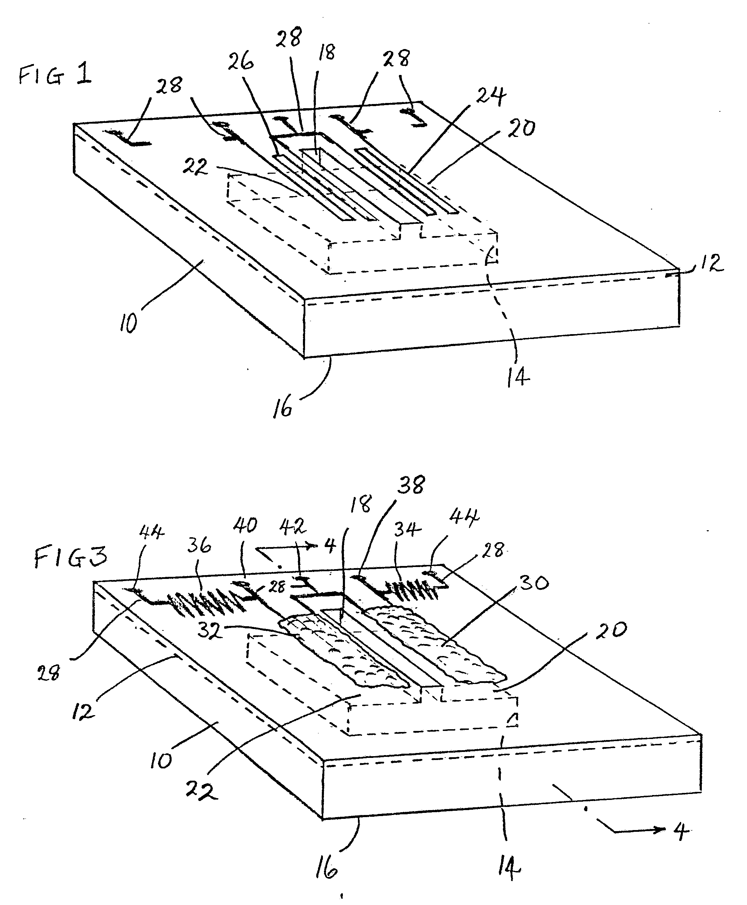

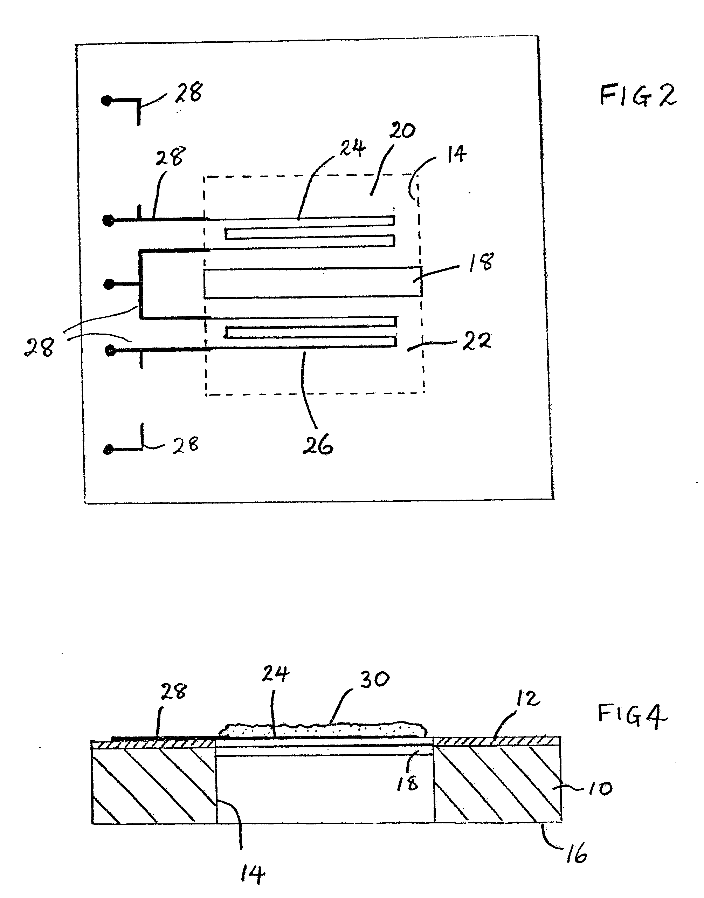

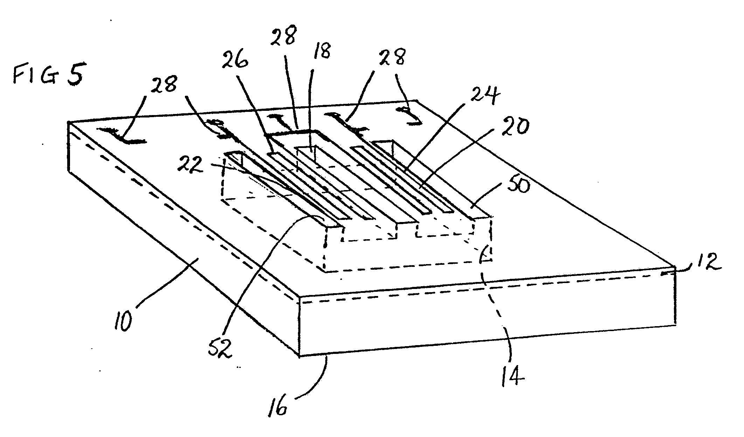

Fig. 5 shows a modification of the embodiment of Figs. 1 to 4 in which additional slots 50 and 52 are provided alongside the heating elements 24 and 26 so as to provide air gaps and thus reduce conductile thermal losses from the bridge portions 20 and 22. The bridge portions in this embodiment are thus only connected to the surrounding portions of the substrate at their ends. The slots 50 and 52 are of similar dimensions to the slot 18 and in other respects to the detector of Fig. 5 is the same as the embodiment of Fig. 1 to 4.

## Claims

1. A catalytic gas detector comprising a substrate, an electrically resistive heating sensing element formed on the substrate as a track of electrically conductive material, and a coating of catalytic material on the electrically resistive heating sensing element.

2. A catalytic detector according to claim 1 in which the substrate comprises a wafer of silicon coated with a layer of electrically insulating material on which the track is deposited.

3. A catalytic detector according to claim 2 in which the layer is of silicon nitride.

4. A catalytic detector according to claim 1, 2 or 3 in which the heating element is formed on a bridge portion of the substrate in which the thickness of the substrate is less than that of the remainder of the substrate.

5. A catalytic detector according to claim 4 in which the bridge portion is formed by removing part of the substrate on the opposite side of the substrate to the heating sensing element.

6. A catalytic detector according to claim 5 in which the thickness of the bridge portion is 10 microns or less.

7. A catalytic detector according to claim 4, 5 or 6 in which the substrate is a silicon substrate with a silicon nitride layer and in which all the silicon is removed in the region of the bridge so that the bridge is formed wholly of the silicon nitride layer.

8. A catalytic detector according to any of the preceding claims in which two heating elements are formed on the substrate, one being coated with the catalytic material to form the sensing element and the other having no catalytic material and forming a compensating element.

9. A catalytic detector according to claim 8 in which the two elements are connected together in a Wheatstone Bridge circuit and in which the resistors which form the third and fourth arms of the Wheatstone Bridge are also formed as a resistive track on the substrate.

10. A catalytic detector according to claim 9 in which the two heating elements are formed on bridge portions of similar dimensions.

11. A catalytic detector according to claim 10 in which a slot is formed in the substrate between the bridge portions to reduce heat transfer between the two heating elements.

12. A catalytic detector according to any of claims 8 to 11 in which the compensating heating element has a coating of inert material to match its thermal characteristics to that of the sensing element.

13. A catalytic detector according to any of the preceding claims in which the catalytic material comprises precious metal dispersed over a ceramic support.

14. A method of manufacturing a catalytic gas detector according to any of the preceding claims including forming an electrically-resistive heating sensing element by depositing a track of electrically-conducting material on a substrate, and coating the sensing element with a catalytic material.

15. A method according to claim 14 in which the substrate is coated with an electrically and thermally insulating layer prior to deposition of the sensing element.

16. A method according to claim 15 in which the substrate is of silicon and the layer is formed by vapour deposition by reacting NH2 and SiH2Cl2 above the heated substrate to produce a deposited film of Si3N4.

17. A method according to claim 14, 15 or 16 in which the track is deposited by masking the substrate and coating the substrate with the electrically conductive material.

18. A method according to any of claims 14 to 17 in which several such catalytic detectors are formed simultaneously on a single wafer of silicon, the wafer then being divided up to form individual detectors.

19. A method according to any of claims 14 to 18 in which the resistive heating sensing element is formed on a bridge portion of the substrate and in which the bridge portion is formed by etching the substrate on the side opposite to the side which carries the resistive heating sensing element.

20. A method according to any of claims 14 to 19 in which the resistive heating sensing element is formed on a bridge portion of the substrate and in which the bridge portion of the substrate and in which the bridge portion is formed prior to the deposition of the track which forms the resistive heating element.

FIG 1

FIG3

FIG 2

28

28

24

20

14

18

28

22

28

26

FIG 4

28

24

30

12

18

10

14

16

FIG 5